# EUROPÄISCHE PATENTANMELDUNG

(11) **EP 1 128 258 A2**
(43) Veröffentlichungstag der Anmeldung: **29.08.2001**
(21) Anmeldenummer: 01101217.6
(22) Anmeldetag: 19.01.2001
(51) Int. Cl.: G06F 3/12

(54) **Rechner für eine Druckmaschine**

(30) Priorität: 09.02.2000 DE 20002260 U
(71) Anmelder: MAN Roland Druckmaschinen AG, 63075 Offenbach (DE)
(72) Erfinder: Duschl, Dieter, Dr., 63071 Offenbach (DE); Schlitz, Thomas, 63165 Mühlheim (DE); Schebesta, Dietrich, Dipl.-Phys., 63071 Offenbach (DE); Wiedekind-Klein, Alexander, 61449 Steinbach (DE)

(57) **Zusammenfassung**

Beschrieben wird ein Rechner für eine Druckmaschine, insbesondere für den Leitstand einer Druckmaschine, wobei der Rechner neben einem nichtflüchtigen, wiederbeschreibbaren Massenspeicher ein Schreib-Lesegerät für Chipkarten aufweist und ferner eine Anzeigeeinrichtung sowie Bedienelemente mit dem Rechner verbunden sind. Aufgabe der vorliegenden Erfindung ist es, einen derartigen Rechner so zu erweitern, dass eine Zugriffsberechtigung in einfacher Weise möglich ist. Gelöst wird diese Aufgabe dadurch, dass die Chipkarte (6) Informationen enthält, welche über das Schreib-Lesegerät (5) erfassbar sind und durch den Rechner (2) zur Freigabe von über die Anzeigeeinrichtung (3) und über die Bedienelemente (4) aufrufbaren Programmmenüs verarbeitet werden.

## Beschreibung

### [Stand der Technik]

Druckmaschinen der heutigen Bauart weisen ein oder mehrere Rechner auf, durch welche Steuerungsfunktionen der Maschine insgesamt bzw. einzelner Komponenten übernommen werden. Dem Leitstand der Druckmaschine ist ein Rechner mit einer Anzeigevorrichtung (Monitor) und Bedienelementen (Tastatur) zugeordnet. Über den Leitstand der Druckmaschine kann der auf der Druckmaschine ausgeführte Druckprozess überwacht und durch Vorgabe von Stellbefehlen beeinflusst werden. Weiterhin dient der Leitstand der Druckmaschine der Maschinenüberwachung sowie der Dokumentation von Maschinenzuständen aber auch dem Abspeichern von ausgeführten Druckaufträgen. Über den Leitstand der Druckmaschine können auch Voreinstellwerte für die Vorbereitung eines neuen Druckauftrages vorgegeben werden. Diese Voreinstellwerte können insbesondere über ein Netzwerk dem Rechner des Leitstandes zugeführt werden.

Eine einfache und weit verbreitete Form der Datenweiterleitung sowie Aufbewahrung sind in Form von Disketten oder Chipkarten ausgebildete Speicher. In der Druckvorstufe bei der Herstellung der Druckform bzw. durch das Scannen der Druckformen erzeugte Daten zur Voreinstellung für die Farbund Feuchtmittelführung einer Offsetdruckmaschine können auf einer Diskette bzw. einer Chipkarte abgespeichert werden und nach Aufruf eines entsprechenden Menüs im Leitstand und dem Einlegen des Speichermediums in ein Lesegerät des Leitstandes abgerufen und zur Ausführung gebracht werden.

Ist der Rechner des Leitstandes der Druckmaschine als PC (Personal Computer) ausgebildet, so weist dieser neben einer Festplatte als Massenspeicher auch ein Laufwerk für Disketten auf. Die voranstehend erläuterten Voreinstelldaten sowie auch Daten, welche nach Beendigung eines ausgeführten Druckauftrages abzuspeichern sind, können über dieses Diskettenlaufwerk zur Weiterverarbeitung auf Disketten gespeichert werden und stehen somit an anderer Stelle zur Verfügung. Auf Grund von Papierstaub, Puder, Luftfeuchtigkeit und anderen Umweltbedingungen im Drucksaal müssen die Diskettenlaufwerke an besonders geschützten Orten angeordnet werden. Dies wäre insbesondere ein verschließbarer Schaltschrank. Demzufolge ist das Einspielen von neuen Daten bzw. das Abspeichern von Daten des Rechners des Leitstandes auf eine Diskette wegen der auszuführenden Handhabungen unkomfortabel. Aus diesem Grunde werden seit einiger Zeit Druckmaschinen der MAN Roland Druckmaschinen AG mit einem Chipkartenlesegerät ausgerüstet, der die Bezeichnung Jobcard-Reader beträgt. Für den Druckprozess relevante Daten können über dieses Kartenlesegerät dem Leitstandsrechner zugeführt und für insbesondere die Weiterverarbeitung relevante Daten nach Beendigung des Druckauftrages bzw. Daten für Wiederholaufträge über das Kartenlesegerät abgespeichert werden. Durch die leichthandhabbare Chipkarte können Daten auch an anderen Druckmaschinen, welche mit dem Jobcard-Reader ausgerüstet sind, eingespielt und aufgerufen werden. So ist ein komfortabler Datentransfer auch zwischen nicht vernetzen Druckmaschinen möglich.

Über den Leitstand der Druckmaschine lassen sich eine Vielzahl von den Druckprozess als auch die Maschine betreffenden Einstellung überwachen und verändern. Insbesondere zur Behebung von Störungen sind weit reichende Maßnahmen bzw. Eingriffe in die Maschinensteuerung nötig. Über den Leitstand können entsprechende Menüs zur Verfügung gestellt werden, durch welche die Analyse von Fehlermeldungen und somit das Auffinden und Beheben von Fehlerursachen ermöglicht wird. Derartige Eingriffe dürfen aber nur von speziell qualifizierten bzw. unterwiesenen Personen ausgeführt werden. Ferner dürfen Hilfspersonen an Druckmaschinen nur ganz bestimmte Aufgaben ausführen, um größere Schäden und Personengefährdungen zu vermeiden. So muss insbesondere vermieden werden, dass eine nicht qualifizierte Person in Verbindung mit entsprechenden Menüs über den Leitstand der Druckmaschine Wartungsmaßnahmen ausführt.

Aus der EP 0 586 907 B1 ist ein Rechner für den Leitstand einer Maschine, insbesondere einer Bogenoffsetdruckmaschine bekannt, bei der die Zugriffsberechtigung für eine Bedienperson zum Ausführen bestimmter Operationen in den verschiedenen Menüs des Leitstandes durch eine vor dem Booten des Rechners in das Diskettenlaufwerk einzulegende Schlüsseldiskette geprüft wird. Die Diskette verwendet eine durch eine vorgegebene Boot-Routine abfragbare Schlüsselinformation, durch welche dann bestimmte Menüpunkte freigegeben bzw. andere Menüpunkte gesperrt werden. So ist es möglich, weit reichende Eingriffe auf die Maschinensteuerung bzw. Manipulationen innerhalb des Leitstandprogrammes nur durch speziell qualifizierte / eingewiesene Personen ausführen zu lassen.

Die Verwendung von Disketten mit Schlüsselinformationen zur Vergabe von differenzierten Zugriffsberechtigungen ist aber bei modernen PC-Rechner problematisch. Neuere Diskettenlaufwerke und Betriebssysteme, wie insbesondere Windows NT, können in bestimmter Weise auf Disketten abgelegte Schlüsselinformationen nicht mehr verarbeiten. Weiterhin sind Disketten sehr empfindlich gegenüber Umwelteinflüssen wie Staub, Puder, Magnetfelder, mechanische Kräfte, Farbe, Lösungsmittel usw.. Ein Diskettenlaufwerk ist daher an einem gegen diese Einflüsse abgeschirmten Ort anzuordnen, was die Handhabung der Disketten für einen Benutzer umständlich gestaltet.

### [Aufgabe der Erfindung]

Aufgabe der vorliegenden Erfindung ist es daher, einen Rechner gemäß dem Oberbegriff von Anspruch 1 derartig zu erweitern, sodass eine Zugriffsberechtigung in einfacher Weise möglich ist.

Gelöst wird diese Aufgabe durch die kennzeichnenden Merkmale von Anspruch 1. Weiterbildungen der Erfindung ergeben sich aus den Unteransprüchen.

Gemäß der Erfindung ist vorgesehen, dass der Leitstand der Druckmaschine über ein zugeordnetes Chipkarten-Lesegerät und die so erfassbaren Daten in Verbindung mit einer Chipkarten-Lesegerät steuernden Programmroutine eine Berechtigungsabfrage der jeweils den Rechner gerade bedienenden Person durchführt. Dabei kann vorgesehen sein, dass ohne eine in das Lesegerät eingeführte Chipkarte der Rechner über Monitor und Bedienelemente nur eingeschränkte Funktionen zulässt. Will eine Bedienperson über den Leitstand die Druckmaschine ansteuern bzw. bestimmte Funktionen in Gang setzen, so ist es erforderlich, dass die Person eine ihren Autorisierungsgrad wiedergebende Chipkarte in das Lesegerät einlegt. Durch eine im Rechner abgelegte und zur Ausführung bringbare Prüffunktion wird die Autorisierung der Bedienperson geprüft und daraufhin die dieser Autorisierung zugeordneten Menüpunkte freigeschaltet. Der Bedienperson stehen dann beispielsweise sämtliche Menüpunkte zur Bedienung der Druckmaschine bzw. der Funktion der Druckmaschine, sämtliche bzw. vorgegebene Menüpunkte zur Fehlerdiagnose und Behebung von Steuerungsursachen bzw. sämtliche oder vorgegebene Menüpunkte zur Ausführung von Wartungsarbeiten an der Maschine zur Verfügung.

Die Verwendung eines Chipkarten-Lesegerätes in Verbindung mit der auf den Chipkarten abgespeicherten (lesbaren) Zugangsberechtigung für einzelne Bedienpersonen erweitert die Möglichkeiten eines derartigen Maschinenrechners erheblich. Weiterhin können die Chipkarten zur Abspeicherung von Daten und somit zum Datentransport zwischen nicht vernetzten Rechnersystem verwendet werden. Die einzelnen Bedienpersonen können, entsprechend dem Grad der Autorisierung, individuell mit über das Anzeigeelement und die Bedienelemente darstellbaren / handhabbaren Menüpunkten konfrontiert werden. Ein unberechtigtes Verstellen von Einstellwerten, Konfigurationen bzw. gar das Ausführen von nicht erlaubten Funktionen wird somit vermieden.

Weiterhin ist es möglich, ein elektronisches Maschinenlogbuch zu führen, welches vorzugsweise auf einen Massenspeicher des Leitstandsrechners der Druckmaschine (Festplatte) abgelegt ist. Da jede die Druckmaschine bedienende bzw. über den Leitstand mit dem Rechnersystem der Maschine kommunizierende Person während der Operation eine Chipkarte in das Chipkarten-Lesegerät einzuführen hat, ist dokumentierbar, welche Person zu welchen Zeiten welche Handhabungen (Abfragungen, Einstellungen, Arbeiten usw.) ausgeführt hat. Dies erleichtert die Analyse von evtl. auftretenden Störungen, da in einer Vielzahl von Fällen Maschinenstörungen durch unsachgemäße Dateneingaben und dergleichen verursacht werden.

Gemäß einer Weiterbildung der Erfindung kann vorgesehen sein, dass der Berechtigungsgrad (Autorisierung) einer Bedienperson über die Chipkarte in Verbindung mit über die Tastatur zusätzlich einzugebenden Passwörtern ermittelt wird. So kann vermieden werden, dass eine für bestimmte Maßnahmen nicht berechtigte Personen in Verbindung mit einer Chipkarte Operationen über den Leitstand der Maschine ausführt.

Wie bereits zuvorstehend erwähnt, ist das Chipkarten-Lesegerät als ein Schreib-Lesegerät ausgebildet, d.h. über den Rechner der Druckmaschine können die in das Schreib-Lesegerät eingeführten Karten beschrieben und auch gelesen werden. So lässt sich nicht nur die Autorisierung einer Bedienperson feststellen, sondern es können auch anderweitig verwertbare Daten auf die Chipkarte geschrieben werden. Diese verarbeitbaren Daten können an anderen mit diesem Rechner der Maschine nicht vernetzen Rechner geladen werden. Weiterhin können beispielsweise von Servicepersonen die Konfigurationen der Maschine betreffende Daten auf die Karte abgespeichert und am anderen Ort zur Analyse von Fehlern / Störungen verwendet werden. Weiterhin kann bei Serviceeinsätzen auf der Karte quittiert werden, dass bestimmte Maßnahmen ordnungsgemäß ausgeführt wurden.

Gemäß einer Weiterbildung der Erfindung kann vorgesehen sein, dass über das Schreib-Lesegerät auch neue Chipkarten für Benutzer ausgestellt werden können. Dazu hat eine autorisierte Person erst die sie für diese Funktion autorisiert ausweisende Chipkarte in das Schreib-Lesegerät einzuführen und einen entsprechenden Menüpunkt aufzurufen. Daraufhin wird für die vorgesehene Bedienperson eine neue Chipkarte in das Schreib-Lesegerät eingeführt und dieses sodann mit den vorgesehenen Autorisierungsinformationen beschrieben.

Eine weitere bevorzugte Ausführungsform der Erfindung sieht vor, dass auch die Einschaltfunktion der Maschine über die Chipkarte ausgeführt wird. Erst durch das Einlegen der Chipkarte in das Schreib-Lesegerät wird der Rechner sowie die Maschine über entsprechend ansteuerbare Schalter hochgefahren. Dadurch kann auch ein Hauptschalter entfallen.

Nachfolgend werden weitere durch die erfindungsgemäß vorgesehene Chipkarte freischaltbare bzw. auslösbare Funktionen genannt. Es sind dies: Vergabe von Lizenzen bzw. Rücknahme von Lizenzen (Testlizenz, zeitlich begrenzte Lizenz), Berechtigung zu Datensicherung, Backup/Restoure (Tools), Pausensperrfunktion zum Verhindern unbefugter Maschinenbedienung, Zeiterfassung für BDE.

### [Beispiele]

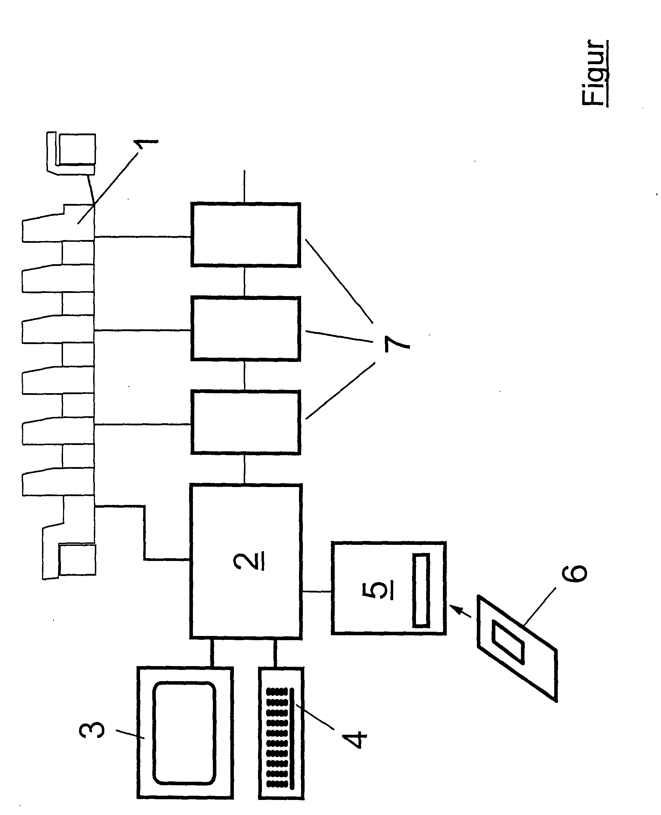

Des Weiteren erfolgt die Erläuterung eines Ausführungsbeispiels der Erfindung anhand der Zeichnung. Diese zeigt einen dem Leitstand der Druckmaschine zugeordneten Rechner mit einer Schreib-Leseeinrichtung für Chipkarten.

Einer Druckmaschine 1 ist ein als PC ausgebildeter Rechner 2 eines Leitstandes zugeordnet. Der Rechner 2 steht mit einem Monitor 3 sowie einer Dateneingabeeinrichtung (Tastatur) 4 in Verbindung. Weiterhin ist an dem Rechner 2 ein Schreib-Lesegerät 5 für Chipkarten 6 angeschlossen. Über im Rechner 2 gespeicherte Routinen erfolgt eine Abfrage der auf der Chipkarte 6 abgespeicherten Informationen, welche vorzugsweise codiert enthalten sind. Eine den Rechner 2 und somit die Druckmaschine 1 in Betrieb nehmende Bedienperson hat vor dem Ausführen vorgesehener Operationen eine ihre Autorisierung / Berechtigung wiedergebende Chipkarte 6 in das Schreib-Lesegerät 5 einzuführen, woraufhin dann über die im Rechner 2 abgelegten Programmroutinen das Sperren /Entsperren der für die Bedienperson / deren Autorisierungsgrad vorgesehenen Menüpunkte auf dem Monitor 3 und den Bedienelementen 4 erfolgt.

Über das an den Rechner 2 des Leitstandes der Druckmaschine 1 angeschlossene Schreib-Lesegerät 5 können auch Zugriffsberechtigungen für Handhabungen / Manipulationen an weiteren mit dem Rechner 2 verbundenen Rechnern 7 der Druckmaschine 1 erfolgen. Bei den weiteren Rechnern 7 kann es sich insbesondere um die Steuerung der Druckmaschine bildende Einrichtungen handeln. Eine besonders qualifizierte Bedienperson, welche auf diesen Rechnern 7 Manipulationen bzw. Prüffunktionen ausführen will, hat eine entsprechende Chipkarte 6 in das Lesegerät 5 des Rechners 2 einzuführen, woraufhin dann durch die im Rechner 2 abgelegten Programmroutinen und das den Rechner 2 mit den weiteren Rechnern 7 verbindene Netzwerk vorgesehene Menüpunkte zur Visualisierung sowie zur Änderung von Daten in den Rechnern 7 freigeschaltet werden.

### [Bezugszeichenliste]

- 1: Druckmaschine
- 2: Rechner (Leitstandrechner)
- 3: Monitor
- 4: Bedienelemente (Tastatur)
- 5: Schreib-Lesegerät
- 6: Chipkarte
- 7: Rechner (Steuerung)

## Patentansprüche

1. Rechner für eine Druckmaschine, insbesondere für den Leitstand einer Druckmaschine, wobei der Rechner neben einem nichtflüchtigen, wiederbeschreibbaren Massenspeicher ein Schreib-Lesegerät für Chipkarten aufweist und ferner eine Anzeigeeinrichtung sowie Bedienelemente mit dem Rechner verbunden sind,
dadurch gekennzeichnet,
dass die Chipkarte (6) Informationen enthält, welche über das Schreib-Lesegerät (5) erfassbar sind und durch den Rechner (2) zur Freigabe von über die Anzeigeeinrichtung (3) und über die Bedienelemente (4) aufrufbaren Programmmenüs verarbeitet werden.

2. Rechner nach Anspruch 1,
dadurch gekennzeichnet,
dass die auf der Chipkarte (6) enthaltenen Informationen verschlüsselt gespeichert sind.

3. Rechner nach Anspruch 1 oder 2,
dadurch gekennzeichnet,
dass die auf der Chipkarte (6) enthaltenen Informationen in Verbindung mit über die Bedienelemente (4) des Rechners (2) eingebbaren Information (Passwort) zur Freigabe von über die Anzeigeeinrichtung (3) und über die Bedienelemente (4) aufrufbaren Programmmenüs verarbeitet werden.

4. Rechner nach einem der vorhergehenden Ansprüche,
dadurch gekennzeichnet,
dass über das mit dem Rechner (2) verbundene Schreib-Lesegerät (5) Programmmenüs weiterer mit dem Rechner (2) über ein Bussystem verbundener Rechner (7) freigebbar sind.
